# EUROPEAN PATENT SPECIFICATION

(11) **EP 3 560 633 B1**
(45) Date of publication and mention of the grant of the patent: **01.09.2021**
(21) Application number: 18169957.0
(22) Date of filing: 27.04.2018
(51) Int. Cl.: B29C 64/153, B29C 64/277, B29C 64/393, B33Y 30/00, B33Y 50/02, B22F 10/00, B22F 12/00, B22F 10/10

(54) **APPARATUS FOR ADDITIVELY MANUFACTURING THREE-DIMENSIONAL OBJECTS AND METHOD FOR DETERMINING AT LEAST ONE PARAMETER OF AN ENERGY BEAM**
VORRICHTUNG ZUR GENERATIVEN FERTIGUNG DREIDIMENSIONALER OBJEKTE UND VERFAHREN ZUM BESTIMMEN VON WENIGSTENS EINEM PARAMETER EINES ENERGIESTRAHLS
APPAREIL POUR LA FABRICATION ADDITIVE D'OBJETS TRIDIMENSIONNELS ET PROCÉDÉ DE DÉTERMINATION AU MOINS UN PARAMÈTRE D'UN RAYON D'ÉNERGIE

(43) Date of publication of application: 30.10.2019
(73) Proprietor: CL Schutzrechtsverwaltungs GmbH, 96215 Lichtenfels (DE)
(72) Inventor: Bokkes, Tobias, 96253 Untersiemau (DE); Zeulner, Fabian, 96215 Lichtenfels (DE)
(74) Representative: Hafner & Kohl PartmbB

(56) References cited:
- WO-A1-2016/094827
- DE-A1-102015 207 834
- US-A1- 2017 266 762

## Description

The invention relates to an apparatus for additively manufacturing three-dimensional objects by means of successive layerwise selective irradiation and consolidation of layers of a build material which can be consolidated by means of an energy beam, which apparatus comprises a determination device that is adapted to determine at least one parameter relating to the energy beam.

Apparatuses for additively manufacturing three-dimensional objects in which the build material is selectively irradiated and thereby consolidated, e.g. via irradiation with an energy beam, are generally known from prior art. In such apparatuses an energy beam is guided over build material which is arranged in a build plane to deplete energy in the build material and thereby consolidate the build material dependent on the geometrical structure of the object to be additively manufactured.

Further, it is known from prior art that the amount of energy that is depleted in the build material, i.e. in a certain volume of build material, is crucial for process quality and object quality, as the consolidation behavior is significantly influenced by the amount of energy that is depleted in the respective volume of build material. Thus, it is beneficial to measure the intensity of the energy beam, e.g. via a measurement performed via an optical sensor, such as a CCD or a CMOS sensor, for example in advance to an additive manufacturing process. Such an optical sensor can be arranged in a build chamber of the apparatus and the energy beam can be guided onto the optical sensor, wherein the intensity and therefore, the energy depleted via the energy beam can be determined.

In this known approach it is not possible to take certain properties or conditions which are present in the additive manufacturing process into calculation, for example an absorption coefficient of the build material, residues that are generated during the additive manufacturing process that may influence, in particular absorb, a part of the energy beam before it is incident on the build material, or the like.

Document DE 10 2015 207 834 A1 discloses an apparatus for additively manufacturing three-dimensional objects with a laser source that can be used to generate a laser beam and guide the laser beam via an optical fiber to an optical system for collimating the laser beam, wherein the laser beam can be guided via a beam guiding mirror across a build plane. Radiation emitted from the melting track can be recorded via an optical determination unit, e.g. a pyrometer.

US 2017/0 266 762 A1 teaches an additive manufacturing system with a heat source adapted to emit a beam that can be focused in a build plane for generating a molten region in build material arranged in the build plane. The molten region emits radiation which can be detected.

From WO 2016/0 94 827 A1 an additive manufacturing system with an energy source is known that emits an energy beam towards a material bed. The energy beam is reflected at said material bed and can be captured via a corresponding beam sensor.

It is an object of the present invention to provide an apparatus for additively manufacturing three-dimensional objects, wherein the determination of the parameter relating to the energy beam, in particular the parameter relating to an energy that is depleted in the build material via the energy beam, is improved.

The object is achieved by an apparatus according to claim 1 and a method according to claim 13.

Advantageous embodiments of the invention are subject to the dependent claims.

The apparatus described herein is an apparatus for additively manufacturing three-dimensional objects, e.g. technical components, by means of successive selective layerwise consolidation of layers of a powdered build material ("build material") which can be consolidated by means of an energy beam, in particular a laser beam or an electron beam. A respective build material can be a metal, ceramic or polymer powder. A respective energy beam can be a laser beam or an electron beam. A respective apparatus can be an apparatus in which an application of build material and a consolidation of build material is performed separately, such as a selective laser sintering apparatus, a selective laser melting apparatus or a selective electron beam melting apparatus, for instance.

The apparatus may comprise a number of functional units which are used during its operation. Exemplary functional units are a process chamber, an irradiation device which is adapted to selectively irradiate a build material layer disposed in the process chamber with at least one energy beam, and a stream generating device which is adapted to generate a gaseous fluid stream at least partly streaming through the process chamber with given streaming properties, e.g. a given streaming profile, streaming velocity, etc. The gaseous fluid stream is capable of being charged with non-consolidated particulate build material, particularly smoke or smoke residues generated during operation of the apparatus, while streaming through the process chamber. The gaseous fluid stream is typically inert, i.e. typically a stream of an inert gas, e.g. argon, nitrogen, carbon dioxide, etc.

As described before, the invention relates to an apparatus for additively manufacturing three-dimensional objects with a determination device which is adapted to determine at least one parameter relating to the energy beam that is used in the additive manufacturing process to consolidate the build material. The invention is based on the idea that the determination device comprises at least one determination unit adapted to determine at least one first parameter of a reflected part of the energy beam, which is reflected at the build plane, wherein the determination device is adapted to determine a difference between a reference parameter and the at least one first parameter of the reflected part.

Thus, it is inventively achieved that a first parameter of a reflected part of the energy beam can be determined to extrapolate on the amount of energy that has been depleted in the build material. For example, the part of the energy beam that is reflected at the build plane, i.e. a plane (surface) in which build material is arranged to be irradiated and thereby consolidated to form the three-dimensional object, depends on the amount of energy (and the part that is absorbed in the build plane). Dependent on the conditions under which the additive manufacturing process is performed, the amount of energy (part of the energy beam) that is depleted in the build material and the amount of energy (part of the energy beam) that is reflected at the surface of build material can vary. The determination device of the inventive apparatus may compare the first parameter relating to the reflected part of the energy beam with a reference parameter and therefore, determine a difference between the reference parameter and the first parameter of the reflected part of the energy beam.

For example, the reference parameter can define a specific (target) value or a value range, such as an interval, wherein the reference parameter relates to a proper energy value, e.g. an energy that should be depleted in the build material to achieve a defined consolidation behavior. Thus, if the first parameter of the reflected part of the energy beam matches the reference parameter, the proper amount of energy is depleted in the build material. If the first parameter of the reflected part of the energy beam differs from the reference parameter, it is possible that too much or too little energy is depleted in the build material. Thus, it is possible to determine whether a proper amount of energy is depleted in the build material and thereby, whether the irradiation process and the consolidation process of the build material are performed under suitable process conditions, whereas, if a difference between the reference parameter and the first parameter of the reflected part of the energy beam is determined, an adjustment to the process conditions can be deemed necessary, such as decreasing or increasing the intensity of the energy beam, for instance.

The reference parameter may be defined or may be determined. For example, a determination of the reference parameter is possible, in particular via a corresponding determination unit, as will be described below. It is also possible to define the reference parameter, for example in a control unit or via a user interface. A user of the apparatus, e.g. a plant operator, may enter the reference parameter via the user interface, wherein the reference parameter may be stored in a corresponding control unit of the apparatus. It is also possible to enter information relating to the additive manufacturing process, for example which type of build material is used, and to have the control unit determine the reference parameter based on the entered information.

According to the inventive apparatus, the determination device is adapted to determine the first parameter of at least one reflected part of the energy beam and adapted to determine at least one second parameter of an initial part of the energy beam. Thus, the first parameter relates to the reflected part of the energy beam, which is reflected at the build plane and the second parameter relates to an initial part of the energy beam. The term "initial part" may refer to a part of the energy beam, which is generated via a corresponding energy source, wherein the second parameter is determined before the initial part is incident on the build plane. The "initial" part refers to a part of the energy beam that is coupled into the optical system of the apparatus before it is incident on the build material. Therefore, the initial part of the energy beam relates directly to the energy beam that is coupled into the optical system of the additive manufacturing apparatus without interfering with the process atmosphere or residues in the process chamber. In particular, the second parameter is determined before the initial part of the energy beam is incident on the build plane. The second parameter may therefore, be used as reference parameter.

It is possible to use the second parameter of the initial part of the energy beam and compare the first parameter with the second parameter, which first parameter is related to the reflected part of the energy beam, wherein the determination device may compare both parameters and therefore, extrapolate on the process conditions, in particular the consolidation behavior of the build material that is arranged in the build plane. In particular, it is possible to determine to which degree the energy beam that is incident on the build plane is absorbed in the build material and which part of the energy beam is reflected at the build plane.

The determination device of the inventive apparatus may further comprise at least one first determination unit adapted to determine the first parameter of the at least one reflected part of the energy beam and at least one second determination unit adapted to determine the at least one second parameter of the initial part of the energy beam, wherein the determination device may be adapted to determine a difference between the second parameter of the at least one initial part and the at least one first parameter of the reflected part of the energy beam.

Thus, it is possible that the determination device comprises a first determination unit and a second determination unit, wherein the first determination unit is used to determine the first parameter relating to the reflected part of the energy beam. Further, the determination device comprises the second determination unit to determine the second parameter which relates to the initial part of the energy beam, as described before. As described before, the second parameter of the at least one initial part of the energy beam may be used as reference parameter or may be deemed as reference parameter. The determination device is adapted to determine a difference between both parameters, i.e. the second parameter (reference parameter) and the first parameter. Hence, it is possible to compare the first parameter and the second parameter and therefore, determine the difference between both parameters. The first parameter of the reflected part of the energy beam and/or the second parameter of the initial part of the energy beam are preferably the same type of parameter, for example an energy of the respective part of the energy beam or an intensity (power) of the respective part of the energy beam or the like.

By comparing the first with the second parameter it is possible to determine the amount of the energy beam which is guided onto the build plane that is received within the build material, i.e. absorbed in the build material. In other words, the second parameter of the initial part of the energy beam, e.g. the intensity of the initial part of the energy beam, defines in comparison to the first parameter of the reflected part of the energy beam, e.g. the intensity of the reflected part of the energy beam, the ratio or part of the energy beam that is absorbed in the build material. Thus, the comparison between the first and second parameter or the ratio between the first and the second parameter, defines how much of the energy beam is absorbed in the build material and how much of the energy beam is reflected at the build material. Hence, the determination device is adapted to determine whether the proper amount of energy is depleted in the build material or if too much or too little energy is depleted in the build material. Therefore, the determination device is adapted to determine whether the irradiation process and therefore, the consolidation process is performed under proper conditions.

The first parameter and/or the second parameter preferably are intensities or relate to an intensity (power) of the energy beam and/or an absorbed intensity that is absorbed in the build material. Thus, the first parameter and/or the second parameter may relate to an intensity of the respective part of the energy beam, i.e. the initial part of the energy beam or the reflected part of the energy beam.

Further, the first parameter may relate to topography information of the build material that is arranged in the build plane. As described before, the first parameter of the reflected part of the energy beam relates to the amount of energy or the ratio of the energy beam that is reflected at the build plane. Thus, it is possible to determine the topography of the build material that is arranged in the build plane, e.g. variances in the topography of the surface of build material arranged in the build plane via the first parameter of the reflected part of the energy beam. Variances in the topography of the build material will also result in a variance of the first parameter, as the first parameter, for example the intensity of the reflected part of the energy beam, varies with the topography of the build material the energy beam is incident on, e.g. the direction in which the reflected part of the energy beam propagates. For example, if variances in the topography, such as warps of the object or the build material arranged in the build plane occur, the amount of energy or the ratio of the energy beam that is reflected or scattered and not properly guided to the first determination unit, will increase, as the energy beam is scattered or reflected into another direction and is not incident on the corresponding (first) determination unit. Thus, the variances in the first parameter may directly be related to variances in the topography of the build material arranged in the build plane.

The inventive apparatus may further be improved in that the determination device may be adapted to determine at least one process parameter, wherein the determination device may be adapted to perform the determination of the first parameter dependent on the process parameter. As described before, the additive manufacturing process is performed under various conditions that may directly influence the process quality and/or the object quality, in particular directly influence the consolidation behavior caused by the irradiation of build material. According to this embodiment, the determination device may take into calculation at least one of those process parameters to perform the determination of the first parameter of the reflected part of the energy beam dependent on the process parameter. Thus, process parameters that describe or influence the additive manufacturing process may be determined and taken into calculation to ensure that the first parameter of the reflected part of the energy beam is properly determined.

The process parameter may be or may relate to a build material, in particular an absorption coefficient of the build material, and/or an angle of incidence of the energy beam on the build plane and/or residues generated in the additive manufacturing process. Thus, it is possible to take various process parameters into calculation that influence the amount of energy or the ratio of the energy beam that is reflected or absorbed. For example, the build material that is used in the additive manufacturing process, in particular the absorption coefficient of the build material used in the additive manufacturing process, directly influences the amount of energy that can be depleted in the build material or the ratio of the energy beam that is absorbed via the build material.

Further, the angle of incidence under which the energy beam is incident on the build material that is arranged in the build plane also directly influences the part of the energy beam that is absorbed and a part of the energy beam that is reflected at the build plane. Another process parameter that can be taken into calculation that may influence the ratio of the energy beam that is absorbed in the build material are residues that are generated in the additive manufacturing process, such as a soot, smoke or smolder or non-consolidated build material particles, such as swirled up build material, the atmosphere inside the process chamber is charged with. The energy beam that is guided through the atmosphere of the process chamber can be partially absorbed via those residues, wherein determining the residues and therefore, taking into calculation the ratio of the energy beam that is absorbed via the residues improves the determination of the first parameter, as well.

According to another embodiment of the inventive apparatus, the beam splitting unit may be provided that is adapted to split the initial part off the energy beam, wherein an irradiation device of the apparatus may be adapted to guide the reflected part of the energy beam in line with the energy beam and to guide the reflected part of the energy beam through the beam splitting unit towards the first determination unit. Thus, a beam splitting unit can be provided to split the initial part off the energy beam, e.g. an energy beam incident on the beam splitting unit, wherein a (minor) part of the energy beam is split off the energy beam and guided to the second determination unit, for instance. The reflected part of the energy beam, which propagates from the build plane, is guided in line with the energy beam, e.g. guided via the same irradiation device, in particular a scanning mirror, that is used to guide the energy beam over the build plane towards the beam splitting unit. The reflected part of the energy beam may pass the beam splitting unit and can therefore, be guided to the first determination unit.

Further, a second beam splitting unit may be provided that is adapted to separate the reflected part of the energy beam from radiation emitted from the build plane. Hence, the second beam splitting unit may be provided, for example in succession to the first beam splitting unit with respect to the propagating direction of the reflected part of the energy beam. The second beam splitting unit is adapted to separate radiation that is emitted from the build plane, such as a separation of thermal radiation from the reflected part of the energy beam which is reflected at the build plane. In other words, radiation that is emitted from the build plane and the reflected part of the energy beam that is reflected at the build plane can be guided in line with the energy beam (in the opposite direction), e.g. via the same irradiation device towards the second beam splitting unit. Thus, radiation emitted from the build plane may also be adapted to pass the first beam splitting unit. The second beam splitting unit separates the radiation emitted from the build plane from the reflected part of the energy beam to allow the reflected part of the energy beam to propagate further towards the first determination unit, wherein the radiation emitted from the build plane may propagate towards another (optional) determination unit adapted to determine parameters of the radiation emitted from the build plane.

Additionally or alternatively, the or a first determination unit may be arranged on a transparent wall element delimiting a process chamber in which the additive manufacturing process is performed, wherein the transparent wall element is transparent for the reflected part of the energy beam. In other words, the transparent wall element forms a "window" through which the reflected part of the energy beam can at least partially pass and leave the process chamber towards the first determination unit.

The term "transparent" in this context may refer to the ability of the reflected part of the energy beam to at least partially pass the transparent wall element. Of course, a transparent wall element which can be passed only by a certain ratio of the reflected part of the energy beam, preferably above a defined ratio, e.g. 80% of the reflected part of the energy beam, is also deemed as "transparent". According to this embodiment it is possible to arrange the first determination unit in line with the transparent wall element that delimits the process chamber of the apparatus to allow for the reflected part of the energy beam or a reflected part of the energy beam to propagate through the transparent wall element towards the first determination unit which is adapted to determine the first parameter of the reflected part of the energy beam. Although, it is not necessary, the first determination unit may be arranged directly on the transparent wall element. However it is also possible to arrange the first determination unit in line with the transparent wall element with respect to the propagation direction of the reflected part of the energy beam, for example spaced a defined distance away from the transparent wall element, e.g. 5 cm.

The determination device of the inventive apparatus may comprise at least one optical filter unit that is adapted to filter radiation with a wavelength or a wavelength range differing from the energy beam, in particular differing from 1070 nm. By providing the optical filter unit it is ensured that only the reflected part of the energy beam and/or a the initial part of the energy beam reach the corresponding determination unit, whereas other types of radiation are filtered by the optical filter unit, such as thermal radiation that is emitted from the build plane or a marker beam, which will be absorbed or reflected or scattered at the optical filter unit and cannot pass the optical filter unit to be incident on the determination units.

The determination device may preferably further comprise two optical filter units, wherein the first optical filter unit is arranged between an energy source generating the energy beam and the second determination unit and the first optical filter unit is arranged between the build plane and the first determination unit. Thus, the energy beam that is generated via a corresponding energy source may be incident on the first beam splitting unit, via which the initial part of the energy beam is split off the energy beam. The second optical filter unit can be arranged between the energy source and the second determination unit to filter the radiation components from the initial part of the energy beam. The first optical filter unit may be arranged in advance to the first determination unit with respect to the propagation direction of the reflected part of the energy beam. Thus, the reflected part of the energy beam, which is reflected at the build plane propagates through the optical system towards the first determination unit. Preferably, the first optical filter unit is arranged between the second beam splitting unit and the first determination unit.

Further, the invention relates to a method according to the appended claim 13 for determining at least one parameter of an energy beam used in an apparatus for additively manufacturing three-dimensional objects by means of successive layerwise selective irradiation and consolidation of layers of a build material which can be consolidated by means of an energy beam, the method comprising the steps of guiding the energy beam onto build material that is arranged in a build plane, wherein the energy beam is partially reflected at the build plane, determining at least one first parameter of a reflected part of the energy beam, which is reflected at the build plane and determining a difference between a reference parameter and the at least one first parameter of the reflected part and determining a second parameter of at least one initial part of the energy beam, which initial part is coupled into an optical system of the apparatus before it is incident on the build plane.

Exemplary embodiments of the invention are described with reference to the Fig. The Fig. are schematic diagrams, wherein
- Fig. 1: shows an inventive apparatus according to a first embodiment in a; and
- Fig. 2: shows an inventive apparatus according to a second embodiment.

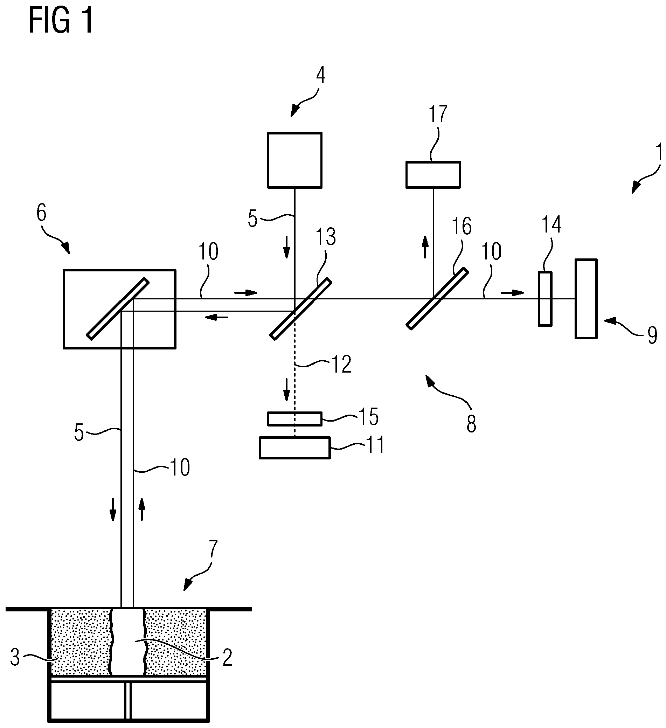

Fig. 1 shows an apparatus 1 for additively manufacturing three-dimensional objects 2 by means of successive layerwise selective irradiation and consolidation of layers of a build material 3. The apparatus 1 comprises an energy source 4, for example a laser source that is adapted to generate an energy beam 5, for example a laser beam. The build material 3 can be consolidated via the energy beam 5 in that an irradiation device 6 is adapted to selectively guide the energy beam 5 across a build plane 7 in which a layer of build material 3 is arranged.

The apparatus 1 further comprises a determination device 8 that comprises a first determination unit 9 that is adapted to determine a first parameter of a reflected part 10 of the energy beam 5, which is reflected at the build plane 7. The determination device 8 is further adapted to determine a difference between a reference parameter and the first parameter of the reflected part 10. It is possible that the reference parameter is defined, in particular via a control unit (not shown) or via a user interface (not shown). In this exemplary embodiment the reference parameter is determined via the determination device 8, in particular via a second determination unit 11.

Via the second determination unit 11 the determination device 8 is adapted to determine a second parameter of an initial part 12 of the energy beam 5, wherein the determination device 8 is adapted to determine a difference between the first parameter of the reflected part 10 and the second parameter of the initial part 12. In this exemplary embodiment, the apparatus 1 comprises a first beam splitting unit 13 that is adapted to split the initial part 12 off the energy beam 5 as the energy beam 5 is incident on the first beam splitting unit 13. The energy beam 5 is guided via the first beam splitting unit 13 to the irradiation device 6 which is adapted to guide the energy beam 5 in the build plane 7 or across the build plane 7, respectively.

The reflected part 10 of the energy beam 5 is reflected at the build plane 7, in particular the surface of build material 3 that is arranged in the build plane 7. The reflected part 10 therefore, propagates towards the irradiation device 6 and is guided in line (in the opposite direction) with the energy beam 5. Thus, the reflected part 10 of the energy beam 5 is incident on the first beam splitting unit 13 and may pass the first beam splitting unit 13 to further propagate towards the first determination unit 9. As can be derived from Fig. 1, the determination device 8 is adapted to determine the first parameter of the reflected part 10 of the energy beam 5 and the second parameter of the initial part 12 of the energy beam 5. The determination of the first parameter is performed via the first determination unit 9 and the determination of the second parameter is determined via the second determination unit 11.

As can further be derived from Fig. 1, the determination device 8 comprises a first optical filter unit 14 that is arranged between the build plane 7 and the first determination unit 9 with respect to the beam path of the reflected part 10 of the energy beam 5 propagating between the build plane 7 and the first determination unit 9. The first optical filter unit 14 is adapted to filter radiation other than the reflected part 10 of the energy beam 5, in particular to separate the reflected part 10 of the energy beam 5 from other types of radiation, such as thermal radiation emitted from the build plane 7. The first optical filter unit 14 may for example be built as bandpass filter allowing radiation with the wavelength of the reflected part 10 of the energy beam 5 to pass the optical filter unit 14, in particular a wavelength of 1070 nm.

The determination device 8 further comprises a second optical filter unit 15 that is arranged between the energy source 4 and the second determination unit 11. Similar to the first optical filter unit 14, in particular identical to the first optical filter unit 14, the second optical filter unit 15 is adapted to filter radiation other than the initial part 12 of the energy beam 5. Hence, only the initial part 12 of the energy beam 5 may pass the second optical filter unit 15 and can be incident on the second determination unit 11. The first and second determination unit 9, 11 may be built as optical sensors or may comprise optical sensors, such as a CCD or CMOS sensors, in particular a photo diode and/or a camera. Hence, the first and the second determination unit 9, 11 are adapted to determine various parameters of the reflected part 10 or the initial part 12 of the energy beam 5, in particular the power or the intensity of the respective part 10, 12, in particular spatially resolved.

The first parameter of the reflected part 10 of the energy beam 5 may also relate to topography information indicating whether the topography of the build material 3 arranged in the build plane 7 is even or whether variances in the topography of the build material 3 occur. As the intensity or the power of the reflected part 10 that is incident on the first determination unit 9 varies, if the surface of build material 3 arranged in the build plane 7 varies in height or is unevenly distributed or the surface of the object 2 arranged in the build plane 7 is not plane. Thus, the reflected part 10 of the energy beam 5 will be scattered or reflected into a different direction and cannot be properly guided in line towards the first determination unit 9. Further, the reflection characteristic in which the energy beam 5 is reflected at the build plane 7 generating the reflected part 10 of the energy beam 5 also varies with the topography of build material 3 that is arranged in the build plane 7.

Further, the determination device 8 comprises a second beam splitting unit 16 that is adapted to split the radiation that is emitted from the build plane 7, in particular separate the reflected part 10 of the energy beam 5 from other types of radiation, such as thermal radiation emitted from the build plane 7. The determination device 8 comprises a third determination unit 17 that is adapted to determine a parameter of radiation that is emitted from the build plane 7, in particular thermal radiation, such as the intensity of thermal radiation or the temperature of build material 3 arranged in the build plane 7, for instance.

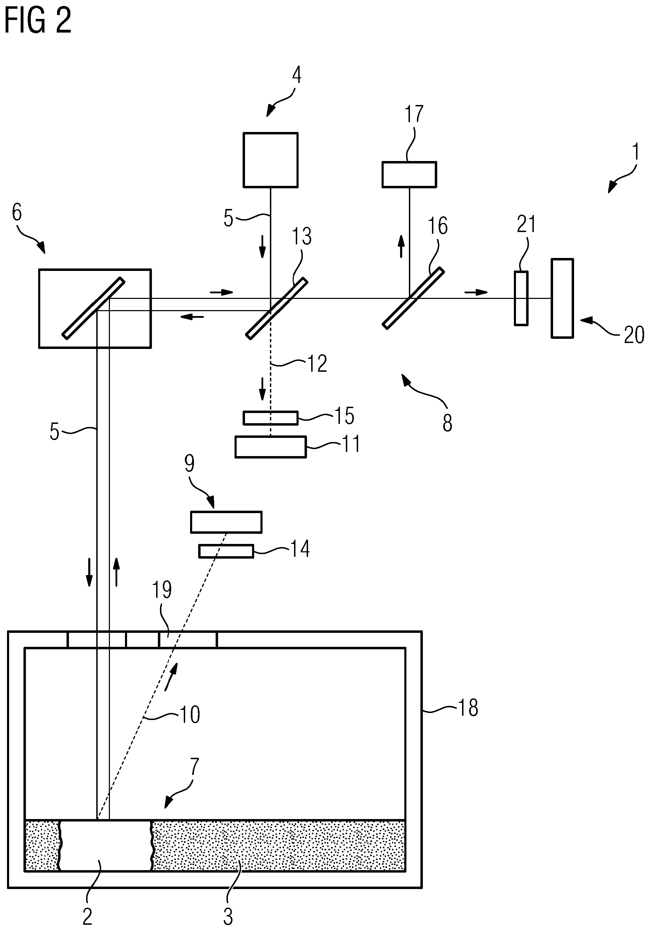

Fig. 2 shows an apparatus 1 according to a second embodiment, wherein the apparatus 1 that is depicted in Fig. 2 generally is built following the same set up as the apparatus 1 depicted in Fig. 1. Therefore, the same numerals are used for the same parts. In particular, the apparatus 1 that is depicted in Fig. 2 also comprises an energy source 4 for generating an energy beam 5 that is guided via an irradiation device 6 in the build plane 7 which is arranged in a process chamber 18. The energy beam 5 is also partially reflected at the build plane 7, for example at the object 2, wherein the reflected part 10 of the energy beam 5 is guided via the irradiation device 6, wherein the reflected part 10 is propagating towards the first determination unit 11.

Deviant from the setup that is depicted in Fig. 1, the first determination unit 11 is arranged at a transparent wall element 19 that is transparent for the reflected part 10 of the energy beam 5. The transparent wall element 19 can therefore, be deemed as "window". Analog to the setup that is depicted in Fig. 1, the first optical filter unit 14 is arranged between the build plane 7 and the first determination unit 11 with respect to the beam path of the reflected part 10 of the energy beam 5. Besides, the apparatus 1 that is depicted in Fig. 2 also comprises a first beam splitting unit 13 for splitting the initial part 12 off the energy beam 5 which propagates towards the second determination unit 11 to determine the second parameter of the initial part 12 of the energy beam 5. Hence, the determination device 8 of the apparatus 1 is adapted to determine a difference between a reference parameter, in particular the second parameter of the initial part 12 of the energy beam 5 with the first parameter of the reflected part 10 of the energy beam 5. Thus, it can be determined which part or which ratio of the energy beam 5 is absorbed in the build material 3 in the build plane 7 and which part is reflected or scattered at the build plane 7.

Therefore, a control of the energy that is depleted within the build material 3 is feasible to ensure that a proper amount of energy is absorbed, which directly influences the consolidation behavior of irradiated build material 3 arranged in the build plane 7.

Further, the determination device 8 according to the exemplary embodiment that is depicted in Fig. 2 comprises a fourth determination unit 20 that is adapted to determine a parameter of radiation emitted from the build plane 7 such as thermal radiation. The third optical filter unit 21 is provided in advance to the fourth determination unit 20 with respect to the propagation path of the radiation emitted from the build plane 7. The third optical filter unit 21 is adapted to filter a part of the energy beam 5, for example the reflected part 10 of the energy beam 5 to ensure that only the thermal radiation is incident on the fourth determination unit 20. For example, it is possible to build the third determination unit 17 as camera and the fourth determination unit 20 as photo diode to ensure that an intensity measurement and a spatially resolved measurement of the intensity distribution of radiation that is emitted from the build plane 7 is possible.

The determination device 8 of the apparatus 1 depicted in Fig. 1, 2 is further adapted to determine a process parameter, such as the angle of incidence of the energy beam 5 on the build plane 7 and the type of build material that is used, in particular an absorption efficient of the build material 3 used in the additive manufacturing process. Further, the determination device 8 is adapted to determine residues generated in the additive manufacturing process, such as soot, smoke or smolder or non-consolidated build material particles inside the process chamber 18.

## Claims

1. Apparatus (1) for additively manufacturing three-dimensional objects (2) by means of successive layerwise selective irradiation and consolidation of layers of a build material (3) which can be consolidated by means of an energy beam (5), which apparatus (1) comprises a determination device (8) that is adapted to determine at least one parameter relating to the energy beam (5), wherein the determination device (8) comprises at least one determination unit (9) adapted to determine at least one first parameter of a reflected part (10) of the energy beam (5), which is reflected at a build plane (7), wherein the determination device (8) is adapted to determine a difference between a reference parameter and the at least one first parameter of the reflected part (10), **characterized in that** the determination device (8) is adapted to determine a second parameter of at least one initial part (12) of the energy beam (5), which initial part (12) is coupled into an optical system of the apparatus (1) before it is incident on the build plane (7).

2. Apparatus according to claim 1, **characterized in that** the reference parameter is defined or determined.

3. Apparatus according to claim 1 or 2, **characterized in that** the determination device (8) comprises at least one first determination unit (9) adapted to determine the first parameter of the at least one reflected part (10) of the energy beam (5) and at least one second determination unit (11) adapted to determine the at least one second parameter of the initial part (12) of the energy beam (5), wherein the determination device (8) is adapted to determine a difference between the first parameter of the at least one reflected part (10) and the second parameter of the at least one initial part (12).

4. Apparatus according to one of the preceding claims, **characterized in that** the first parameter and/or the second parameter are or relate to an intensity of the energy beam (5) and/or an absorbed intensity that is absorbed in the build material (3).

5. Apparatus according to one of the preceding claims, **characterized in that** the first parameter relates to topography information of the build material (3) that is arranged in the build plane (7).

6. Apparatus according to one of the preceding claims, **characterized in that** the determination device (8) is adapted to determine at least one process parameter, wherein the determination device (8) is adapted to perform the determination of the first parameter dependent on the process parameter.

7. Apparatus according to one of the preceding claims, **characterized in that** a process parameter is or relates to a build material (3), in particular an absorption coefficient of the build material (3), and/or an angle of incidence of the energy beam (5) on the build plane (7) and/or residues generated in the additive manufacturing process.

8. Apparatus according to one of the preceding claims, **characterized by** a beam splitting unit (13) that is adapted to split the initial part (12) off the energy beam (5), wherein an irradiation device (6) of the apparatus (1) is adapted to guide the reflected part (10) of the energy beam (5) in line with the energy beam (5) and to guide the reflected part (10) of the energy beam (5) through the beam splitting unit (13) towards the first determination unit (9).

9. Apparatus according to claim 8, **characterized by** a second beam splitting unit (16) that is adapted to separate the reflected part (10) of the energy beam (5) from radiation emitted from the build plane (7).

10. Apparatus according to one of the preceding claims, **characterized in that** the or a first determination unit (9) is arranged on a transparent wall element (19) delimiting a process chamber (18) in which the additive manufacturing process is performed, wherein the transparent wall element (19) is transparent for the reflected part (10) of the energy beam (5).

11. Apparatus according to one of the preceding claims, **characterized in that** the determination device (8) comprises at least one optical filter unit (14) that is adapted to filter radiation of a wavelength or a wavelength range differing from the energy beam (5), in particular 1070nm.

12. Apparatus according to one of the preceding claims, **characterized in that** the determination device (8) comprises two optical filter units (14, 15), wherein a second optical filter unit (15) is arranged between an energy source (4) generating the energy beam (5) and a second determination unit (11) and the first optical filter unit (14) is arranged between the build plane (7) and a first determination unit (9).

13. Method for determining at least one parameter of an energy beam (5) used in an apparatus (1) for additively manufacturing three-dimensional objects (2) by means of successive layerwise selective irradiation and consolidation of layers of a build material (3) which can be consolidated by means of an energy beam (5), the method comprising the steps of guiding the energy beam (5) onto build material (3) that is arranged in a build plane (7), wherein the energy beam (5) is partially reflected at the build plane (7), determining at least one parameter of a reflected part (10) of the energy beam (5), which is reflected at the build plane (7) and determining a difference between a reference parameter and the at least one parameter of the reflected part (10), **characterized by** determining a second parameter of at least one initial part (12) of the energy beam (5), which initial part (12) is coupled into an optical system of the apparatus (1) before it is incident on the build plane (7).

## Patentansprüche

1. Vorrichtung (1) zur additiven Herstellung dreidimensionaler Objekte (2) durch sukzessive schichtweise selektive Bestrahlung und Verfestigung von Schichten eines Baumaterials (3), welches mittels eines Energiestrahls (5) verfestigbar ist, welche Vorrichtung (1) eine Bestimmungseinrichtung (8) umfasst, welche eingerichtet ist, wenigstens einen den Energiestrahl (5) betreffenden Parameter zu bestimmen, wobei die Bestimmungseinrichtung (8) wenigstens eine Bestimmungseinheit (9) umfasst, welche eingerichtet ist, wenigstens einen ersten Parameter eines reflektierten Teils (10) des Energiestrahls (5), welcher an einer Bauebene (7) reflektiert ist, zu bestimmen, wobei die Bestimmungseinrichtung (8) eingerichtet ist, einen Unterschied zwischen einem Referenzparameter und dem wenigstens einen ersten Parameter des reflektierten Teils (10) zu bestimmen, **dadurch gekennzeichnet, dass** die Bestimmungseinrichtung (8) eingerichtet ist, einen zweiten Parameter wenigstens eines Eingangsteils (12) des Energiestrahls (5) zu bestimmen, welcher Eingangsteil (12) in ein optisches System der Vorrichtung (1) eingekoppelt ist, bevor er auf die Bauebene (7) trifft.

2. Vorrichtung nach Anspruch 1, **dadurch gekennzeichnet, dass** der Referenzparameter definiert oder bestimmt ist.

3. Vorrichtung nach Anspruch 1 oder 2, **dadurch gekennzeichnet, dass** die Bestimmungseinrichtung (8) wenigstens eine erste Bestimmungseinheit (9), welche zur Bestimmung des ersten Parameters des wenigstens einen reflektierten Teils (10) des Energiestrahls (5) eingerichtet ist, und wenigstens eine zweite Bestimmungseinheit (11), welche zur Bestimmung des wenigstens einen zweiten Parameters des Eingangsteils (12) des Energiestrahls (5) eingerichtet ist, wobei die Bestimmungseinrichtung (8) eingerichtet ist, einen Unterschied zwischen dem ersten Parameter des wenigstens einen reflektierten Teils (10) und dem zweiten Parameter des wenigstens einen Eingangsteils (12) zu bestimmen.

4. Vorrichtung nach einem der vorhergehenden Ansprüche, **dadurch gekennzeichnet, dass** der erste Parameter und/oder der zweite Parameter eine Intensität des Energiestrahls (5) und/oder eine absorbierte Intensität, welcher in dem Baumaterial (3) absorbiert ist, ist oder betreffen.

5. Vorrichtung nach einem der vorhergehenden Ansprüche, **dadurch gekennzeichnet, dass** der erste Parameter Topographieinformationen des Baumaterials (3), das in der Bauebene (7) angeordnet ist, betrifft.

6. Vorrichtung nach einem der vorhergehenden Ansprüche, **dadurch gekennzeichnet, dass** die Bestimmungseinrichtung (8) eingerichtet ist, wenigstens einen Prozessparameter zu bestimmen, wobei die Bestimmungseinrichtung (8) eingerichtet ist, die Bestimmung des ersten Parameters in Abhängigkeit des Prozessparameters zu bestimmen.

7. Vorrichtung nach einem der vorhergehenden Ansprüche, **dadurch gekennzeichnet, dass** ein Prozessparameter ist oder betrifft ein Baumaterial (3), insbesondere einen Absorptionskoeffizienten des Baumaterials (3), und/oder einen Auftreffwinkel des Energiestrahls (5) auf der Bauebene (7) und/oder in dem additiven Herstellungsprozess erzeugte Rückstände.

8. Vorrichtung nach einem der vorhergehenden Ansprüche, **gekennzeichnet durch** eine Strahlaufteilungseinheit (13), welche eingerichtet ist, den Eingangsteil (12) aus dem Energiestrahl (5) herauszuteilen, wobei eine Bestrahlungseinrichtung (6) der Vorrichtung (1) eingerichtet ist, den reflektierten Teil (10) des Energiestrahls (5) gemeinsam mit dem Energiestrahl (5) zu führen und den reflektierten Teil (10) des Energiestrahls (5) durch die Strahlaufteilungseinheit (13) in Richtung der ersten Bestimmungseinheit (9) zu führen.

9. Vorrichtung nach Anspruch 8, **gekennzeichnet durch** eine zweite Strahlaufteilungseinheit (16), welche eingerichtet ist, den reflektierten Teil (10) des Energiestrahls (5) von von der Bauebene (7) emittierter Strahlung zu trennen.

10. Vorrichtung nach einem der vorhergehenden Ansprüche, **dadurch gekennzeichnet, dass** die oder eine erste Bestimmungseinheit (9) auf einem transparenten Wandelement (19), welches eine Prozesskammer (18), in welcher der additive Herstellungsprozess durchgeführt ist, angeordnet ist, wobei das transparente Wandelement (19) transparent für den reflektierten Teil (10) des Energiestrahls (5) ist.

11. Vorrichtung nach einem der vorhergehenden Ansprüche, **dadurch gekennzeichnet, dass** die Bestimmungseinrichtung (8) wenigstens eine optischen Filtereinheit (14) umfasst, welche eingerichtet ist, Strahlung einer Wellenlänge oder eines Wellenlängenbereichs unterschiedlich von dem Energiestrahl (5), insbesondere 1070 nm, zu filtern.

12. Vorrichtung nach einem der vorhergehenden Ansprüche, **dadurch gekennzeichnet, dass** die Bestimmungseinheit (8) wenigstens zwei optische Filtereinheiten (14, 15) umfasst, wobei eine zweite optische Filtereinheit (15) zwischen einer Energiequelle (4), welche den Energiestrahl (5) erzeugt, und einer zweiten Bestimmungseinheit (11) angeordnet ist, und die erste optische Filtereinheit (14) zwischen der Bauebene (7) und einer ersten Bestimmungseinheit (9) angeordnet ist.

13. Verfahren zur Bestimmung wenigstens eines Parameters eines Energiestrahls (5), welcher in einer Vorrichtung (1) zur additiven Herstellung dreidimensionaler Objekte (2) durch sukzessive schichtweise selektive Bestrahlung und Verfestigung von Schichten eines Baumaterials (3), welches mittels eines Energiestrahls (5) verfestigbar ist, verwendet wird, wobei das Verfahren die Schritte umfasst: Führen des Energiestrahls (5) auf Baumaterial (3), welches in einer Bauebene (7) angeordnet ist, wobei der Energiestrahl (5) teilweise an der Bauebene (7) reflektiert ist, Bestimmen wenigstens eines Parameters des reflektierten Teils (10) des Energiestrahls (5), welcher an der Bauebene (7) reflektiert ist, und Bestimmen eines Unterschieds zwischen einem Referenzparameter und dem wenigstens einen Parameter des reflektierten Teils (10), **gekennzeichnet durch** Bestimmen eines zweiten Parameters wenigstens eines Eingangsteils (12) des Energiestrahls (5), welcher Eingangsteil (12) in ein optisches System der Vorrichtung (1) eingekoppelt wird, bevor er auf die Bauebene (7) trifft.

## Revendications

1. Appareil (1) pour la fabrication additive d'objets tridimensionnels (2) par irradiation et solidification sélectives successives, couche par couche, de couches d'un matériau de construction (3) qui peut être solidifié au moyen d'un faisceau d'énergie (5), lequel appareil (1) comprend un dispositif de détermination (8) qui est conçu pour déterminer au moins un paramètre relatif au faisceau d'énergie (5), qui est agencé pour déterminer au moins un paramètre relatif au faisceau d'énergie (5), le dispositif de détermination (8) comprenant au moins une unité de détermination (9) qui est agencée pour déterminer au moins un premier paramètre d'une partie réfléchie (10) du faisceau d'énergie (5), réfléchi sur un plan de bâtiment (7), le dispositif de détermination (8) étant agencé pour déterminer une différence entre un paramètre de référence et le au moins un premier paramètre de la partie réfléchie (10), **caractérisé en ce que** le dispositif de détermination (8) est agencé pour déterminer un deuxième paramètre d'au moins une partie d'entrée (12) du faisceau d'énergie (5), laquelle partie d'entrée (12) est couplée dans un système optique du dispositif (1) avant qu'il ne frappe le plan de bâtiment (7).

2. Appareil selon la revendication 1, **caractérisé en ce que** le paramètre de référence est défini ou déterminé.

3. Appareil selon la revendication 1 ou 2, **caractérisé en ce que** le dispositif de détermination (8) comprend au moins une première unité de détermination (9) agencée pour déterminer le premier paramètre de la au moins une partie réfléchie (10) du faisceau d'énergie (5), et au moins une deuxième unité de détermination (11), qui est agencée pour déterminer le au moins un deuxième paramètre de la partie d'entrée (12) du faisceau d'énergie (5), dans lequel l'unité de détermination (8) est agencée pour déterminer une différence entre le premier paramètre de la au moins une partie réfléchie (10) et le deuxième paramètre de la au moins une partie d'entrée (12).

4. Appareil selon l'une quelconque des revendications précédentes, **caractérisé en ce que** le premier paramètre et/ou le second paramètre est ou concerne une intensité du faisceau d'énergie (5) et/ou une intensité absorbée qui est absorbée dans le matériau de construction (3).

5. Appareil selon l'une quelconque des revendications précédentes, **caractérisé en ce que** le premier paramètre concerne des informations de topographie du matériau de construction (3) situé dans le plan de construction (7).

6. appareil selon l'une quelconque des revendications précédentes, **caractérisé en ce que** le moyen de détermination (8) est agencé pour déterminer au moins un paramètre de processus, dans lequel le moyen de détermination (8) est agencé pour déterminer la détermination du premier paramètre en fonction du paramètre de processus.

7. Appareil selon l'une quelconque des revendications précédentes, **caractérisé en ce qu'**un paramètre du procédé est ou concerne un matériau de construction (3), en particulier un coefficient d'absorption du matériau de construction (3), et/ou un angle d'incidence du faisceau d'énergie (5) sur le plan de construction (7) et/ou des résidus générés dans le procédé de fabrication additive.

8. Appareil selon l'une quelconque des revendications précédentes, **caractérisé par** une unité de division de faisceau (13) agencée pour séparer la partie d'entrée (12) du faisceau d'énergie (5), dans lequel un dispositif d'irradiation (6) de l'appareil (1) est agencé pour guider la partie réfléchie (10) du faisceau d'énergie (5) avec le faisceau d'énergie (5) et pour guider la partie réfléchie (10) du faisceau d'énergie (5) à travers l'unité de division de faisceau (13) vers la première unité de détermination (9).

9. Appareil selon la revendication 8, **caractérisé par** une seconde unité de division de faisceau (16) agencée pour séparer la partie réfléchie (10) du faisceau d'énergie (5) du rayonnement émis par le plan de construction (7).

10. Appareil selon l'une quelconque des revendications précédentes, **caractérisé en ce que** la ou une première unité de détermination (9) est disposée sur un élément de paroi transparent (19) définissant une chambre de traitement (18) dans laquelle le processus de fabrication additive est réalisé, ledit élément de paroi transparent (19) étant transparent à la partie réfléchie (10) du faisceau d'énergie (5).

11. Appareil selon l'une quelconque des revendications précédentes, **caractérisé en ce que** le dispositif de détermination (8) comprend au moins une unité de filtrage optique (14) agencée pour filtrer un rayonnement d'une longueur d'onde ou d'une plage de longueur d'onde différente du faisceau d'énergie (5), notamment 1070 nm.

12. Appareil selon l'une quelconque des revendications précédentes, **caractérisé en ce que** l'unité de détermination (8) comprend au moins deux unités de filtre optique (14, 15), une deuxième unité de filtre optique (15) étant disposée entre une source d'énergie (4) générant le faisceau d'énergie (5) et une deuxième unité de détermination (11), et la première unité de filtre optique (14) étant disposée entre le plan de construction (7) et une première unité de détermination (9).

13. Procédé de détermination d'au moins un paramètre d'un faisceau d'énergie (5) utilisé dans un appareil (1) pour la fabrication additive d'objets tridimensionnels (2) par irradiation et solidification sélectives successives, couche par couche, de couches d'un matériau de construction (3) solidifiable au moyen d'un faisceau d'énergie (5), le procédé comprenant les étapes suivantes : guider le faisceau d'énergie (5) sur un matériau de construction (3) disposé dans un plan de construction (7), le faisceau d'énergie (5) étant partiellement réfléchi au niveau du plan de construction (7), déterminer au moins un paramètre de la partie réfléchie (10) du faisceau d'énergie (5) réfléchi au niveau du plan de construction (7) et déterminer une différence entre un paramètre de référence et le au moins un paramètre de la partie réfléchie (10), **caractérisé par** la détermination d'un second paramètre d'au moins une partie d'entrée (12) du faisceau d'énergie (5), laquelle partie d'entrée (12) est couplée dans un système optique du dispositif (1) avant qu'elle ne frappe le plan de construction (7).
